# EUROPEAN PATENT SPECIFICATION

(11) **EP 2 745 556 B1**
(45) Date of publication and mention of the grant of the patent: **26.12.2018**
(21) Application number: 12755794.0
(22) Date of filing: 14.08.2012
(51) Int. Cl.: H04W 28/24, H04W 28/02, H04W 72/08

(54) **METHOD FOR INFLUENCING THE QUALITY OF SERVICE RELATED TO A TELECOMMUNICATION CONTACT ON THE PART OF A TELECOMMUNICATION TERMINAL, MOBILE RADIO TELECOMMUNICATION NETWORK, TELECOMMUNICATION TERMINAL, COMPUTER PROGRAM AND COMPUTER PROGRAM PRODUCT**
METHODE ZUR BEEINFLUSSUNG DER DIENSTQUALITÄT IN RELATION ZU EINER TELEKOMMUNIKATIONSVERBINDUNG AUF SEITEN DES TELEKOMMUNIKATIONSTERMINALS, NETZWERK, TERMINAL, COMPUTERPROGRAMM UND COMPUTERPROGRAMMPRODUKT DAFÜR
PROCÉDÉ POUR INFLUENCER LE QUALITY OF SERVICE EN RELATION D'UN CONNEXION DE COMMUNICATION À UN TERMINAL DE COMMUNICATION, RESEAU, TERMINAL,PROCÉDÉ ET PRODUIT PROGRAMME D'ORDINATEUR CORRESPONDANT

(30) Priority: 17.08.2011 DE 102011110475
(43) Date of publication of application: 25.06.2014
(73) Proprietor: Deutsche Telekom AG, 53113 Bonn (DE)
(72) Inventor: BREITBACH, Markus, 53227 Bonn (DE); RÖBKE, Matthias, 50859 Cologne (DE)
(74) Representative: Schwöbel, Thilo K.
(86) International application number: PCT/EP2012/003458
(87) International publication number: WO 2013/023779

(56) References cited:
- EP-A2- 1 011 228
- WO-A1-2011/095669

## Description

### Prior art

The invention relates to a method, a mobile radio telecommunication network and a telecommunication terminal for influencing the quality of service related to a telecommunication contact on the part of a telecommunication terminal during the establishment and/or during the operation of the telecommunication contact, wherein the telecommunication contact is provided in the form of a telecommunication link or a telecommunication session between a mobile radio telecommunication network and the telecommunication terminal, wherein the telecommunication contact is optionally operable in accordance with a first quality of service or in accordance with a second quality of service It is generally known to use quality of service mechanisms (QoS mechanisms) to divide communication traffic into a plurality of classes (or to define a plurality of classes of communication traffic) having different priorities when setting up links and in transmitting data. Reference should be made here to the Internet standards RFC (Request for Comments) 2474 (Definition of the Differentiated Services Field (DS Field) in the IPv4 (Internet Protocol Version 4) and IPv6 (Internet Protocol Version 6) Headers), RFC 2475 (An Architecture for Differentiated Services), RFC 2597 (Assured Forwarding PHB Group), RFC 3168 (The Addition of Explicit Congestion Notification (ECN) to Internet Protocol (IP) (updating of RFC 2474), RFC 3246 (An Expedited Forwarding PHB (Per-Hop Behavior)) (renders RFC 2598 obsolete) or to the mobile radio standards for the UMTS standard 3GPP TS 23.107 (Quality of Service (QoS) concept and architecture) and 3GPP TS 23.207 (End-to-end Quality of Service (QoS) concept

Document EP 1 011 228 A2 discloses a reduction in the class of service to selected users when the availability of free resources becomes too small.

However, hitherto provision has not been made for transmitting information about the instantaneous traffic load situation to the terminals or to the users in a mobile radio telecommunication network. This applies, in particular, to the mobile radio communication systems in accordance with the GSM standard, the UMTS standard or HSPA (High Speed Packet Access) and LTE. In particular, therefore, it is not possible for a customer of an operator of a mobile radio telecommunication network to decide in an individual manner whether (in situations of high network load) the customer priority is on either a higher quality of service or quality of the link or a higher data rate (with higher costs being accepted), or else on lower costs and also in association therewith a possibly lower quality of the link or a lower data rate of the link.

### Disclosure of the invention

The volume of traffic in communication networks is subject to periodic fluctuations over the course of a day and over the course of a week. The peak load that occurs in this case is critical for the dimensioning of the network, that is to say for the capacity of the network nodes and of the links. Therefore, the peak load demanded tends to reduce the rate (i.e. network components having a lower capacity would be sufficient or a larger volume of traffic or a larger number of customers could be served by the same network resources) if it is possible to distribute the traffic load over the course of a day or over the course of a week more uniformly. In view of the constantly increasing volume of traffic, expansion of the network could thus be deferred.

Therefore, the invention addresses the problem of providing a method, a mobile radio telecommunication network and a telecommunication terminal for influencing the quality of service related to a telecommunication contact on the part of a telecommunication terminal during the establishment and/or during the operation of the telecommunication contact, wherein the telecommunication contact is provided in the form of a telecommunication link or a telecommunication session between a mobile radio telecommunication network and the telecommunication terminal, wherein the telecommunication contact is alternatively operable in accordance with a first quality of service or in accordance with a second quality of service, wherein the user of the telecommunication terminal, i.e. typically the customer of an operator of a mobile radio telecommunication network, is enabled, in a simple and transparent manner, to influence the quality of the communication demanded and the price to be paid for this, such that overall more efficient utilization of the resources of the mobile radio telecommunication network (in particular through reduction of traffic load spikes and in particular for data services, for instance for acces to the Internet via mobile radio systems such as GSM (Global System for Mobile communication), UMTS (Universal Mobile Telecommunications System), LTE (Long Term Evolution), cdma2000 (Code Division Multiple Access)) can be realized in conjunction with as far as possible the same or better user satisfaction.

This problem is solved according to the invention by means of a method for influencing the quality of service related to a telecommunication contact on the part of a telecommunication terminal (20) during the establishment and/or during the operation of the telecommunication contact, wherein the telecommunication contact is provided in the form of a telecommunication link or a telecommunication session between a mobile radio telecommunication network (10) and the telecommunication terminal (20),wherein the telecommunication contact is alternatively operable in accordance with a first quality of service or in accordance with a second quality of service,wherein first control information (15), related to the traffic load, is transmitted from the mobile radio telecommunication network (10) to the telecommunication terminal (20), wherein second control information (25) is transmitted from the telecommunication terminal (20) to the mobile radio telecommunication network (10), wherein the first control information (15) is traffic load information related to the radio cell of the telecommunication terminal (20) and is signaled to all telecommunication terminals in the radio cell, the second control information (25) is generated depending on the first control information (15) and the telecommunication contact is established and/or operated in accordance with the first quality of service or in accordance with the second quality of service depending on the second control information (25), wherein the first or second quality of service is selected on the telecommunication terminal (20), either by means of a decision or according to a configuration of the telecommunication terminal (20).

According to the invention, in accordance with a first alternative embodiment:
-- the instantaneous usage factor of the mobile radio telecommunication network is signalled to the user or the latter's telecommunication terminal (owing to the first control information in the form of traffic load information related to the radio cell of the telecommunication terminal);
-- the network utilization of one customer (i.e. the traffic of one customer) can be given priority in the mobile radio telecommunication network - at the request of this customer and for an additional charge - over the traffic of other customers in phases of high traffic usage;
-- the customer can decide himself/herself whether, in view of the instantaneous network usage, the possibility of communicating (or the possibility of communicating with a specific (high or higher) quality) is so important to said customer that the customer is prepared to pay the additional price associated with this.

According to the invention, in accordance with a second alternative embodiment, in a form abstracted from the instantaneous usage factor of the mobile radio telecommunication network in the instantaneous cell of the telecommunication terminal (or else a geographical region going somewhat beyond the instantaneous cell, such as, for example, in the instantaneous location area) - namely by means of first control information related to the mobile radio telecommunication network (or at least related to relatively large parts thereof such as a location area (or a plurality of location areas) or to a plurality of radio cells) and second control information likewise related to the mobile radio telecommunication network (or at least related to relatively large parts thereof such as a location area (or a plurality of location areas) or to a plurality of radio cells) - a setting (which is static until a typically customer-induced change) is effected as to how (individually in relation to a specific telecommunication terminal or a specific customer) the reaction to different (instantaneous) usage factors of the mobile radio telecommunication network is intended to be manifested. Thus, this setting (which can be independent of a concrete (or specific) communication requirement of the customer), which, for example, is valid throughout the mobile radio telecommunication network or relates at least to relatively large parts of the mobile radio telecommunication network, can be defined to the effect that the network utilization of the customer (i.e. the traffic of a customer) is given priority in the mobile radio telecommunication network over the traffic of other customers in phases of high traffic usage for an additional charge, wherein the customer, by means of the first and second control information related to the mobile radio telecommunication network, for example the entire mobile radio telecommunication network or at least relatively large parts thereof, can likewise decide himself/herself whether, in view of a high network usage, the possibility of communicating (or the possibility of communicating with a specific (high or higher) quality) is so important to said customer that the customer is prepared to pay the additional price associated with this.

According to the present invention it is advantageously possible:
-- that an awareness of the expense and the associated costs of the use of the mobile radio telecommunication network during times of high usage is raised among the users of the mobile radio telecommunication network,
-- that furthermore some users, in times of high network load, dispense with the use of the mobile radio telecommunication network or reduce the utilization thereof because they do not wish to accept either the reduced capacity (or performance) of a low-priority data transmission or the additional charge for a data transmission given higher priority; as a result, peak loads are reduced and a more efficient dimensioning of the network components is made possible;
-- that, in view of the ongoing debate about network neutrality, a transparent path is provided, that different quality of service classes and different tariffs can be realized according to the respective (if appropriate also instantaneous) desire of the customer; in particular, discrimination-free access to all services of the Internet is thereby ensured since the customer takes the decision about the quality of service.

According to the invention, in accordance with further advantageous configurations of the present invention - both in accordance with the first embodiment and in accordance with the second embodiment - it can be provided that the customer preference (for the first or second quality of service) differs
-- depending on the instantaneous location of the telecommunication terminal and/or
-- depending on the instantaneous mobile radio telecommunication network utilized by the telecommunication terminal and/or
-- depending on a time and/or
-- depending on an instantaneous preferred communication mode of the user/customer of the telecommunication terminal
and that this different preference (for the first or second quality of service) related to location and/or related to the instantaneously utilized mobile radio telecommunication network and/or related to time and/or related to the communication mode is reflected by the first and second control information to the effect that it is defined, for example, that the first quality of service is preferred if the telecommunication terminal (and thus in many cases also the user), is situated at a location A (for example in the workplace), and that the second quality of service is preferred if the telecommunication terminal is situated at a location B (for example the place of residence). According to the present invention, analogous differentiations with regard to the preference of the first and second quality of service are also possible in relation to specific periods of time over the course of the day and/or over the course of the week and/or over the course of a month and/or over the course of a year.

The present invention is described in particular with regard to or on the basis of the example of HSDPA (High Speed Data Packet Access), an extension of the UMTS standard. However, a realization of the present invention in identical or similar form is likewise possible in the case of other mobile radio communication systems, in particular GSM, LTE, cdma2000 and extensions derived therefrom.

According to the invention, it is provided - in the case of the first embodiment of the present invention - that the first control information related to the radio cell of the telecommunication terminal is transmitted
- on a common channel of the radio cell of the telecommunication terminal, in particular on a broadcast channel or on a forward access control channel (FACH), or
- on an additional channel of the radio cell of the telecommunication terminal. Consequently, in the case of the first embodiment of the present invention, the first control
information - in particular in the form of information concerning the (instantaneous) traffic load (or of a load indicator) in the radio cell of the mobile radio telecommunication network under consideration - is signalled to all subscribers, i.e. all telecommunication terminals, in the radio cell. It is then possible that on an individual basis communication links can be allocated different quality properties (QoS parameters) (such that they can be treated correspondingly in a different manner). In this case, the quality level is selected by the customer or on the telecommunication terminal, either by means of a (instantaneous) decision by the user of the telecommunication terminal or else automatically by the terminal according to a configuration of the customer and, in particular, without participation or influencing by entities of the mobile radio telecommunication network.

The load indicator (or the first control information related to the traffic load within a radio cell (namely the radio cell of the telecommunication terminal under consideration)) is intended to give terminals (or the users thereof) in the radio cell of the mobile radio telecommunication network, already before the beginning of the data transmission or before the start of a user application, a reliable indication of whether, and if so how, the quality of the data transmission (QoS, Quality of Service) or the quality of the user application (QoE, Quality of Experience) might be affected or reduced on account of a high volume of traffic. The load indicator is preferably sent on a radio channel that can be received by all terminals in the radio cell. As a preferred embodiment, it is appropriate to send the load indicator as an additional parameter on a broadcast channel (BCH). Alternatively, it is likewise possible according to the invention to send the load indicator (or the first control information related to the traffic load) on a different common channel, for example as a specific message on the forward access control channel (FACH), or to define a dedicated, additional channel for the transmission of the load indicator.

In order to determine the load indicator (or the first control information related to the traffic load), the network resources busy on account of the traffic load to be transmitted are compared with the available resources. In this, the invention preferably provides for taking account of, inter alia, the following types of resources:
-- the capacity of the signal processing units in the radio network controller (RNC);
-- the number of instantaneously used telecommunication contacts of a specific type relative to a predetermined number of maximally allowed telecommunication contacts of this type, for example voice links;
-- the capacity of the so-called backhaul link (on the so-called lub interface) between the radio network controller (RNC) and the base station unit (or NodeB unit or eNodeB unit) on the basis of, for example, the instantaneous throughput or device-internal parameters of the HSDPA flow control that are not specified in the UMTS standards;
-- the capacity of the signal processing units in the base station unit (in particular NodeB unit or eNodeB unit);
-- the capacity of the air interface on the basis of parameters known in the base station unit (in particular NodeB or eNodeB unit), for example the instantaneous throughput, the average and maximum waiting time (i.e. the 95% percentile) of packets in the HS-(P)DSCH queues (High Speed (Packet) Downlink Shared Channel queues), the average transmission path (in absolute terms or relative to the maximum transmission power available), the number of parallel HSDPA users/HSDPA user contexts (i.e. open communication sessions) and diverse other internal parameters of the HSDPA packet scheduler that are not specified in the UMTS standards;
-- the capacity of the air interface on the basis of parameters known in the radio network controller (RNC) for purposes of admission control or congestion control or load control. According to the invention, a combination of a plurality of types of these resources can also jointly be taken into account.

The load indicator can be determined both by the base station unit (in particular NodeB or eNodeB) and by the radio network controller (RNC). If the base station unit determines the load indicator, it can disseminate the result itself directly by, for example, the broadcast control channel (BCH) in the relevant radio cell. In this case, it is merely necessary to extend the BCH specification (for example in the specification 3GPP 25.331: Radio Resource Control (RRC)). By contrast, if the radio network controller determines the load indicator, it must firstly signal the value to be sent on the BCH to the base station unit. In this case, besides extending the BCH functionality, it is also necessary to extend the procedure "System Information Update" of the lub interface. In this respect, although the determination of the load indicator by the radio network controller is more complex, it affords the possibility of accessing parameters of admission control or congestion control or load control.

According to the invention, it is furthermore also possible and preferred for separate load indicators to be determined both in the radio network controller (RNC) and in the base station unit (in particular NodeB unit or eNodeB unit) and for both to be transmitted via a channel (in particular the BCH) in the radio cell. Furthermore, it is also possible according to the invention for a common load indicator to be determined by the radio network controller and by the base station unit by means of the radio network controller determining an advance load indicator (or a preliminary load indicator), which is signalled to the base station unit and is included by the latter in the determination of the final load indicator (i.e. the one to be broadcast in the radio cell).

According to the invention, it is furthermore preferably provided - both in accordance with the first embodiment of the present invention and in accordance with the second embodiment-that the first control information has a portion related to a first traffic class and a portion related to a second traffic class.

This makes it possible to take account even better of the desire of the customer in a simple and efficient manner.

By way of example, it is possible to determine separate load indicators for specific types of application or types of service (for example voice), for specific traffic classes or traffic priorities, such that the first control information has a portion related to a first traffic class (for example voice links) and a portion related to a second traffic class (for example Internet links).

Congestion of a mobile radio telecommunication network adversely affects the (objective) transmission quality (QoS, Quality of Service) and the quality of experience (QoE) that can be perceived by the user. This can be manifested in lower data rates and higher delay times, but also a poorer voice quality in telephony services or poorer image quality in video streaming. In the case of extreme congestion, network entities can also refuse to set up a (new) link, in order to ensure the transmission quality of the existing links. Conversely, it is possible to utilize these load-dictated quality limitations in order to give priority to individual subscribers in a targeted manner in high-load situations. For this purpose, in the UMTS specifications, so-called allocation parameters and retention parameters for controlling the set-up of links have been defined in 3GPP 25.413 and parameters for QoS differentiation of existing links have been defined, inter alia, in 3GPP 23.107. The procedures and methods which use these parameters are not specified in detail and are therefore largely implementation-specific. Nevertheless, these procedures and methods can be used in the context of the present invention:
In order to set up a new telecommunication contact (i.e. either a telecommunication link or a telecommunication session), the customer's telecommunication terminal sends a request to the GGSN network element (Gateway GPRS Support Node). Said GGSN network element in turn requests the radio network controller to establish a data link via the air interface to the customer's telecommunication terminal. Beforehand, the radio network controller checks whether the resources that are currently freely available allow an additional telecommunication contact to be set up. It is only if the amount of available resources exceeds a certain threshold value that the set-up of the link via the air interface is initiated;
otherwise, the enquiry (or request) of the GGSN network element is rejected. The enquiry (or request) of the GGSN network element contains as part of the parameter "Allocation/Retention Priority", inter alia, a "Priority Level" with a range of values, e.g. the range of values {1, 2, 3}. In deciding whether the available resources are sufficient, the radio network controller can use different threshold values for each value of this priority level. By virtue of the fact that the radio network controller uses a high threshold value for high-priority enquiries, it is possible to reject low-priority enquiries in the event of high network usage or few free resources, while higher-priority enquiries are still accepted and the desired links or telecommunication contacts are set up. The parameter "Allocation/Retention Priority" furthermore provides further-reaching possibilities, for example the termination of existing low-priority links (or telecommunication contacts) in favour of new, high-priority links or telecommunication contacts.

If the radio network controller takes a decision about permitting or rejecting new links or telecommunication contacts, it is preferably provided according to the invention that the radio network controller also defines the load indicator.

If a link or a telecommunication contact to the telecommunication terminal has been set up, the QoS parameters specified in 3GPP 23.107 determine how said link or said telecommunication contact is treated and supplied with the resources in comparison with other links or telecommunication contacts.
For data services, the parameters "traffic class" (with the possible values {Best Effort, Interactive, Streaming, Conversational}), "maximum bit rate" and "traffic handling priority" (with the possible values {1, 2, ..., 15}) are particularly suitable. These parameters are known both in the radio network controller and in the base station unit (i.e. in particular NodeB unit or eNodeB unit) and can be utilized for controlling the resource allocation. Especially for the HSDPA scheduler in the base station unit, it is possible to take account of the parameters "traffic class" and "traffic handling priority" if a decision is taken regarding the communication links for which data packets should be transmitted via the air interface in the next time interval. The HSDPA flow control in the base station unit can likewise take account of these parameters if a decision is taken regarding the links for which the radio network controller is permitted to send further data packets via the lub interface to the base station unit. The QoS parameters mentioned thus effectively allow to influence the capacity utilization of the air interface and of the lub interface. Since the decisions in this respect are taken in the base station unit, it is appropriate for the base station unit to define the load indicator such that the load indicator reflects the load situation on the air interface or lub interface.

According to the present invention, it is furthermore particularly preferred for the second control information to be related to a specific access point name (APN) from a plurality of access point names available for the telecommunication terminal, wherein the indication of the specific access point name is determined by the telecommunication terminal depending on the first control information

As a result, it is advantageously possible according to the invention that the selection of the quality level or the influencing of the quality of service related to a telecommunication contact can be realized in a very simple manner by means of the selection of the access point name. If, therefore, a customer wants to establish a link into the mobile radio telecommunication network, in particular into a data network or a data domain of the mobile radio telecommunication network, for example the Internet, the telecommunication terminal establishes contact with a GGSN network element (Gateway GPRS Support Node). After a successful link set-up, said GGSN network element will function as a gateway into the desired data network. For addressing purposes, an access point name (APN) is assigned to each GGSN network element. What GGSN network elements are available and permitted to be utilized by a customer or a telecommunication terminal is defined in the context of the subscription, i.e. the contract with the network operator of mobile radio telecommunication network. From a technical standpoint, in the HLR network element (Home Location Register) and/or in the HSS network element (Home Subscriber Server), for each customer there is a data record containing an entry for each GGSN network element that said customer is permitted to utilize. Such an entry in turn contains, inter alia, the access point name, the information about the maximum permissible value of the allocation parameter and retention parameter, the maximum permissible quality of service or the quality of service profile and furthermore also accounting information. These and further details are defined, inter alia, in the specification 3GPP 23.060 (General Packet Radio Service (GPRS); Service description; Stage 2).

In the context of the present invention it is proposed to use the choice of the access point name as a possible realization of the setting or the choice of the quality of service of the telecommunication contact. That means that, by way of example, for selecting or for influencing the quality of service of a planned telecommunication contact, the telecommunication terminal selects a specific access point name from a plurality of access point names, wherein the plurality of access point names (and thus GGSN network elements) respectively enable access to one and the same network or to one and the same domain of the mobile radio telecommunication network, for example the Internet, but with different values of parameters (such as priority of the packets, maximum delay time, maximum bandwidth, etc.) determining the quality of service.

Formally, the first and second GGSN network elements are different accesses of (or to) the mobile radio telecommunication network which, however, nevertheless enable access into the same data network, for example the Internet. In practice, they can also be realized on the same physical network node or network element.

In particular, it is preferably provided according to the invention that, in the HLR network element and/or in the HSS network element, for a customer or a telecommunication terminal, a plurality of entries each having different access point names are created, thus for example:
-- first GGSN network element:
   -- access point name: "prio1.internet.t-mobile.de"
   -- allocation/retention parameter (ARP): high
   -- quality of service (QoS): "interactive"; high value of the traffic handling priority
   -- the use of the first GGSN network element is associated with additional costs
-- second GGSN network element:
   -- access point name: "prio2.internet.t-mobile.de"
   -- allocation/retention parameter (ARP): low
   -- quality of service (QoS): "best effort"; no value of the traffic handling priority for "best effort" provided, i.e. low
   -- the use of the second GGSN network element is possible at the normal tariff.

When a telecommunication contact, for example a data link, is set up on the part of a customer (or on the part of a telecommunication terminal) with such a subscription, it is possible to select between a plurality of GGSN network elements (two in the example). The load indicator is available as a decision aid:
-- in the case of a low traffic load (signalled in the radio cell), the second GGSN network element should be used in order to reduce costs; the access point name associated with the second GGSN network element is specified, therefore, when setting up the link;
-- in the case of a high traffic load (signalled in the radio cell) and normal quality of service priority, the quality of service of the telecommunication contact can be adversely affected. By setting a higher quality of service priority, it is possible for a customer to reduce or even avoid these adverse effects. If the additional costs for the higher quality of service are accepted, the access point name associated with the first GGSN network element is specified when setting up the link, otherwise the access point name associated with the second GGSN network element.

The determination of the specific access point name (i.e. the one to be used) for a concrete (or specific) telecommunication contact (and thus of the quality of service to be used) is:
-- achieved in accordance with the first embodiment of the present invention by means of the second control information, wherein the second control information is determined depending on the first control information (or traffic load information or load indicator) related to the radio cell of the telecommunication terminal, on the part of the telecommunication terminal, and
-- achieved in accordance with the second embodiment of the present invention depending on the first and second control information related to the mobile radio telecommunication network, for example the entire mobile radio telecommunication network or at least relatively large parts thereof (such as a plurality of radio cells, e.g. the radio cells of a location area (or a predefined plurality of location areas) or the radio cells specified in a predetermined list or set of radio cells), wherein
-- the exchange of first and second control information takes place between the mobile radio telecommunication network and the telecommunication terminal,
-- however, the user-side (or telecommunication-terminal-side) selection of the quality of service, i.e. of the access point name, for different load situations is stored in a network element of the mobile radio telecommunication network (permanently or until the next user-side change), and
-- is selected on the basis of these stored items of information depending on the local load situation (i.e. load situation related to the radio cell of the telecommunication terminal) present at the time of a telecommunication contact specifically to be set up.

The further subject matter of the present invention is a mobile radio telecommunication network as defined by independent claim 5.

It is preferably provided according to the invention that the generation of the first control information by a base station unit, in particular a NodeB unit or an eNodeB unit, or by a radio network controller (RNC).

Further subject matter of the present invention is furthermore also a telecommunication terminal as defined by independent claim 10.

Furthermore, the present invention also relates to a computer program comprising program code means with the aid of which all steps of the method according to the invention can be carried out if the computer program is executed on a network unit of a mobile radio telecommunication network, a computer or a corresponding computing unit as defined by independent claim 11.

Furthermore, subject matter of the present invention is a computer program product comprising a computer-readable medium and a computer program - stored on the computer-readable medium - comprising program code means with the aid of which all steps of the method according to the invention can be carried out if the computer program is executed on a network unit of a mobile radio telecommunication network, a computer or a corresponding computing unit as defined by independent claim 12.

Further details, features and advantages of the invention are evident from the drawings, and from the following description of preferred embodiments with reference to the drawings. In this case, the drawings illustrate merely exemplary embodiments of the invention, which do not restrict the essential concept of the invention.

### Brief description of the drawings

- **Figure 1**: shows a schematic view of a mobile radio telecommunication network and of a telecommunication terminal.
- **Figure 2**: schematically shows a plurality of access possibilities of a telecommunication terminal to a network, for example the Internet.

### Embodiments of the invention

In the different figures, identical parts are always provided with the same reference signs and therefore generally also named or mentioned only once in each case.

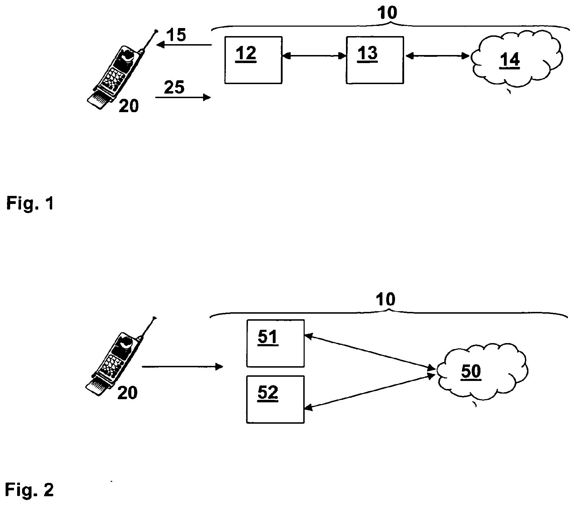

Figure 1 schematically illustrates a view of a mobile radio telecommunication network 10 and of a telecommunication terminal 20. The mobile radio telecommunication network 10 has a base station unit 12 and a radio network controller 13. The latter are part of an access network (not illustrated separately) of the mobile radio telecommunication network 10. The mobile radio telecommunication network 10 furthermore has a core network 14, wherein the core network 14 is connected to the access network, in particular to the radio network controller 13, in order to enable enquiries for telecommunication contacts (or links) of the telecommunication terminal 20 and generally to enable the overall operation of the mobile radio telecommunication network 10.

According to the invention, it is provided that first control information 15 is transmitted from the mobile radio telecommunication network 10 to the telecommunication terminal 20, and that second control information 25 is transmitted from the telecommunication terminal 20 to the mobile radio telecommunication network 10. The first and second control information 15, 25 serve to enable the telecommunication terminal 20 or the user thereof to influence the quality of service of a telecommunication contact (or link), i.e. to make a choice with regard to, for example, a link to a requested network, for instance the Internet, between a link having a higher quality of service (and having additional costs) or a link having a lower quality of service (and without or with lower additional costs).

Figure 2 schematically illustrates a plurality of access possibilities of the telecommunication terminal 20 to a network 50, for example the Internet.

In accordance with a first embodiment of the present invention, provision is made for the first control information 15 to be information which is related to the radio cell of the telecommunication terminal 20 and which is related to the instantaneous traffic load in the radio cell. In the case of the first embodiment, the second control information 25 is generated depending on the first control information 15, and the quality of service of the telecommunication contact is influenced depending on the second control information 25, in particular by the selection of a specific access point name from a plurality of access point names. In Figure 2 this is illustrated schematically by virtue of the fact that a first access point name 51 and a second access point name 52, in principle, enable access to the destination network 50, but using different quality of service parameters. If, for example, the first access point name 51 is selected or addressed by means of the second control information 25, a telecommunication contact (or link) with a higher quality of service is realized, for example. Conversely, if the second access point name 52 is selected or addressed by means of the second control information 25, a telecommunication contact with a lower quality of service is realized, for example.

In accordance with a second embodiment of the present invention, likewise an exchange between the mobile radio telecommunication network 10 and the telecommunication terminal 20 of first and second control information 15, 25 takes place, but the first control information is not related to the radio cell (currently used) of the telecommunication terminal 20, but rather to the mobile radio telecommunication network 10, for example the entire mobile radio telecommunication network or at least to relatively large parts thereof, especially a multitude of radio cells. By means of the second control information 25, a setting (individually related to the telecommunication terminal 20), is implemented which determines the behaviour upon the initiation of telecommunication contacts (or links) of the telecommunication terminal 20 for the entire mobile radio telecommunication network 10 or at least for relatively large regions of the mobile radio telecommunication network 10. This is realized by virtue of the fact that the user choice (expressed by the second control information 25) is stored in a network element of the mobile radio telecommunication network 10.

## Claims

1. Method for influencing the quality of service related to a telecommunication contact on the part of a telecommunication terminal (20) during the establishment and/or during the operation of the telecommunication contact, wherein the telecommunication contact is provided in the form of a telecommunication link or a telecommunication session between a mobile radio telecommunication network (10) and the telecommunication terminal (20),
wherein the telecommunication contact is alternatively operable in accordance with a first quality of service or in accordance with a second quality of service,
wherein first control information (15), related to the traffic load, is transmitted from the mobile radio telecommunication network (10) to the telecommunication terminal (20), wherein second control information (25) is transmitted from the telecommunication terminal (20) to the mobile radio telecommunication network (10), wherein the first control information (15) is traffic load information related to the radio cell of the telecommunication terminal (20) and is signaled to all telecommunication terminals in the radio cell, the second control information (25) is generated depending on the first control information (15) and the telecommunication contact is established and/or operated in accordance with the first quality of service or in accordance with the second quality of service depending on the second control information (25), wherein the first or second quality of service is selected on the telecommunication terminal (20), either by means of a decision or according to a configuration of the telecommunication terminal (20).

2. Method according to Claim 1, **characterized in that** the first control information (15) related to the radio cell of the telecommunication terminal (20) is transmitted
-- on a common channel of the radio cell of the telecommunication terminal (20), in particular on a broadcast channel or on a forward access control channel (FACH), or
-- on an additional channel of the radio cell of the telecommunication terminal (20).

3. Method according to Claim 2, **characterized in that** the first control information (15) has a portion related to a first traffic class and a portion related to a second traffic class.

4. Method according to any of the preceding claims, **characterized in that** the second control information (25) is related to a specific access point name (APN) from a plurality of access point names available for the telecommunication terminal (20), wherein the indication of the specific access point name is determined by the telecommunication terminal (20) depending on the first control information (15).

5. Mobile radio telecommunication network (10), configured for influencing the quality of service related to a telecommunication contact on the part of a telecommunication terminal (20) during the establishment and/or during the operation of the telecommunication contact, wherein the telecommunication contact is provided in the form of a telecommunication link or a telecommunication session between the mobile radio telecommunication network (10) and the telecommunication terminal (20), wherein the telecommunication contact is alternatively operable in accordance with a first quality of service or in accordance with a second quality of service,
wherein the mobile radio telecommunication network (10) is designed to transmit first control information (15) related to the traffic load from the mobile radio telecommunication network (10) to the telecommunication terminal (20), wherein the mobile radio telecommunication network (10) is designed to receive second control information (25) from the telecommunication terminal (20), wherein the first control information (15) is traffic load information related to the radio cell of the telecommunication terminal (20) and is signaled to all telecommunication terminals in the radio cell, the reception of the second control information (25) from the telecommunication terminal (20) is provided depending on the first control information (15) and the telecommunication contact is provided in accordance with the first quality of service or in accordance with the second quality of service depending on the second control information (25), wherein the first or second quality of service is selected on the telecommunication terminal (20), either by means of a decision or according to a configuration of the telecommunication terminal (20).

6. Mobile radio telecommunication network (10) according to Claim 5, **characterized in that** the transmission of the first control information (15) related to the radio cell of the telecommunication terminal (20) is provided
-- on a common channel of the radio cell of the telecommunication terminal (20), in particular on a broadcast channel or on a forward access control channel (FACH), or
-- on an additional channel of the radio cell of the telecommunication terminal (20).

7. Mobile radio telecommunication network (10) according to Claim 6, **characterized in that** the generation of the first control information (15) by a base station unit, in particular a NodeB unit or an eNodeB unit, or by a radio network controller (RNC) is provided.

8. Mobile radio telecommunication network (10) according to Claim 6 or 7, **characterized in that** the first control information (15) has a portion related to a first traffic class and a portion related to a second traffic class.

9. Mobile radio telecommunication network (10) according to any of Claims 6 to 8, **characterized in that** the second control information (25) is related to a specific access point name (APN) from a plurality of access point names available for the telecommunication terminal (20).

10. Telecommunication terminal (20), configured for influencing the quality of service related to a telecommunication contact on the part of the telecommunication terminal (20) during the establishment and/or during the operation of the telecommunication contact, wherein the telecommunication contact is provided in the form of a telecommunication link or a telecommunication session between a mobile radio telecommunication network (10) and the telecommunication terminal (20),
wherein the telecommunication contact is alternatively operable in accordance with a first quality of service or in accordance with a second quality of service,
wherein the telecommunication terminal (20) is designed to receive first control information (15) related to the traffic load from the mobile radio telecommunication network (10), wherein the telecommunication terminal (20) is designed to transmit second control information (25) to the mobile radio telecommunication network (10), wherein the first control information (15) is traffic load information related to the radio cell of the telecommunication terminal (20) and is signaled to all telecommunication terminals in the radio cell, the reception of the second control information (25) from the telecommunication terminal (20) is provided depending on the first control information (15) and the telecommunication contact is provided in accordance with the first quality of service or in accordance with the second quality of service depending on the second control information (25), wherein the first or second quality of service is selected on the telecommunication terminal (20), either by means of a decision or according to a configuration of the telecommunication terminal (20).

11. Computer program comprising program code means with the aid of which all steps of a method according to any of Claims 1 to 4 can be carried out if the computer program is executed on a network unit of a mobile radio telecommunication network (10), a computer or a corresponding computing unit.

12. Computer program product comprising a computer-readable medium and a computer program - stored on the computer-readable medium - comprising program code means with the aid of which all steps of a method according to any of Claims 1 to 4 can be carried out if the computer program is executed on a network unit of a mobile radio telecommunication network (10), a computer or a corresponding computing unit.

## Patentansprüche

1. Verfahren zum Beeinflussen der Dienstqualität im Zusammenhang mit einem Telekommunikationskontakt seitens eines Telekommunikationsendgerätes (20) während der Herstellung und/oder während des Betriebes des Telekommunikationskontakts, wobei der Telekommunikationskontakt in Form einer Telekommunikationsverbindung oder einer Telekommunikationssitzung zwischen einem Mobilfunk-Telekommunikationsnetz (10) und dem Telekommunikationsendgerät (20) bereitgestellt wird,
wobei der Telekommunikationskontakt alternativ gemäß einer ersten Dienstqualität oder gemäß einer zweiten Dienstqualität betrieben werden kann,
wobei erste Steuerungsinformationen (15), die sich auf die Verkehrslast beziehen, von dem Mobilfunk-Telekommunikationsnetz (10) zu dem Telekommunikationsendgerät (20) gesendet werden, wobei zweite Steuerungsinformationen (25) von dem Telekommunikationsendgerät (20) zu dem Mobilfunk-Telekommunikationsnetz (10) gesendet werden, wobei die ersten Steuerungsinformationen (15) Verkehrslastinformationen sind, die sich auf die Funkzelle des Telekommunikationsendgerätes (20) beziehen und an alle Telekommunikationsendgeräte in der Funkzelle signalisiert werden, die zweiten Steuerungsinformationen (25) in Abhängigkeit von den ersten Steuerungsinformationen (15) generiert werden und der Telekommunikationskontakt gemäß der ersten Dienstqualität oder gemäß der zweiten Dienstqualität in Abhängigkeit von den zweiten Steuerungsinformationen (25) hergestellt und/oder betrieben wird, wobei die erste oder die zweite Dienstqualität auf dem Telekommunikationsendgerät (20) entweder mittels einer Entscheidung oder gemäß einer Ausgestaltung des Telekommunikationsendgerätes (20) ausgewählt wird.

2. Verfahren nach Anspruch 1, **dadurch gekennzeichnet, dass** die ersten Steuerungsinformationen (15), die sich auf die Funkzelle des Telekommunikationsendgerätes (20) beziehen, gesendet werden
- auf einem gemeinsamen Kanal der Funkzelle des Telekommunikationsendgerätes (20), insbesondere auf einem Rundsendekanal oder auf einem Forward Access Control Channel (FACH) oder
- auf einem zusätzlichen Kanal der Funkzelle des Telekommunikationsendgerätes (20).

3. Verfahren nach Anspruch 2, **dadurch gekennzeichnet, dass** die ersten Steuerungsinformationen (15) einen Abschnitt aufweisen, der sich auf eine erste Verkehrsklasse bezieht, und einen Abschnitt aufweisen, der sich auf eine zweite Verkehrsklasse bezieht.

4. Verfahren nach einem der vorangehenden Ansprüche, **dadurch gekennzeichnet, dass** sich die zweiten Steuerungsinformationen (25) auf einen speziellen Zugangspunktnamen (Access Point Name, APN) unter mehreren Zugangspunktnamen beziehen, die für das Telekommunikationsendgerät (20) verfügbar sind, wobei der Hinweis auf den speziellen Zugangspunktnamen durch das Telekommunikationsendgerät (20) in Abhängigkeit von den ersten Steuerungsinformationen (15) bestimmt wird.

5. Mobilfunk-Telekommunikationsnetz (10), das dafür ausgestaltet ist, die Dienstqualität im Zusammenhang mit einem Telekommunikationskontakt seitens eines Telekommunikationsendgerätes (20) während der Herstellung und/oder während des Betriebes des Telekommunikationskontakts zu beeinflussen, wobei der Telekommunikationskontakt in Form einer Telekommunikationsverbindung oder einer Telekommunikationssitzung zwischen dem Mobilfunk-Telekommunikationsnetz (10) und dem Telekommunikationsendgerät (20) bereitgestellt wird,
wobei der Telekommunikationskontakt alternativ gemäß einer ersten Dienstqualität oder gemäß einer zweiten Dienstqualität betrieben werden kann, wobei das Mobilfunk-Telekommunikationsnetz (10) dafür ausgelegt ist, erste Steuerungsinformationen (15), die sich auf die Verkehrslast beziehen, von dem Mobilfunk-Telekommunikationsnetz (10) zu dem Telekommunikationsendgerät (20) zu senden, wobei das Mobilfunk-Telekommunikationsnetz (10) dafür ausgelegt ist, zweite Steuerungsinformationen (25) von dem Telekommunikationsendgerät (20) zu empfangen, wobei die ersten Steuerungsinformationen (15) Verkehrslastinformationen sind, die sich auf die Funkzelle des Telekommunikationsendgerätes (20) beziehen und an alle Telekommunikationsendgeräte in der Funkzelle signalisiert werden, wobei der Empfang der zweiten Steuerungsinformationen (25) von dem Telekommunikationsendgerät (20) in Abhängigkeit von den ersten Steuerungsinformationen (15) bereitgestellt wird und der Telekommunikationskontakt gemäß der ersten Dienstqualität oder gemäß der zweiten Dienstqualität in Abhängigkeit von den zweiten Steuerungsinformationen (25) bereitgestellt wird, wobei die erste oder die zweite Dienstqualität auf dem Telekommunikationsendgerät (20) entweder mittels einer Entscheidung oder gemäß einer Ausgestaltung des Telekommunikationsendgerätes (20) ausgewählt wird.

6. Mobilfunk-Telekommunikationsnetz (10) nach Anspruch 5, **dadurch gekennzeichnet, dass** die Übertragung der ersten Steuerungsinformationen (15), die sich auf die Funkzelle des Telekommunikationsendgerätes (20) beziehen, bereitgestellt wird
- auf einem gemeinsamen Kanal der Funkzelle des Telekommunikationsendgerätes (20), insbesondere auf einem Rundsendekanal oder auf einem Forward Access Control Channel (FACH) oder
- auf einem zusätzlichen Kanal der Funkzelle des Telekommunikationsendgerätes (20).

7. Mobilfunk-Telekommunikationsnetz (10) nach Anspruch 6, **dadurch gekennzeichnet, dass** die Generierung der ersten Steuerungsinformationen (15) durch eine Basisstationseinheit, insbesondere eine NodeB-Einheit oder eine eNodeB-Einheit, oder durch eine Funknetzsteuereinheit (Radio Network Controller, RNC) bereitgestellt wird.

8. Mobilfunk-Telekommunikationsnetz (10) nach Anspruch 6 oder 7, **dadurch gekennzeichnet, dass** die ersten Steuerungsinformationen (15) einen Abschnitt aufweisen, der sich auf eine erste Verkehrsklasse bezieht, und einen Abschnitt aufweisen, der sich auf eine zweite Verkehrsklasse bezieht.

9. Mobilfunk-Telekommunikationsnetz (10) nach einem der Ansprüche 6 bis 8, **dadurch gekennzeichnet, dass** sich die zweiten Steuerungsinformationen (25) auf einen speziellen Zugangspunktnamen (APN) unter mehreren Zugangspunktnamen beziehen, die für das Telekommunikationsendgerät (20) verfügbar sind.

10. Telekommunikationsendgerät (20), das dafür ausgestaltet ist, die Dienstqualität im Zusammenhang mit einem Telekommunikationskontakt seitens des Telekommunikationsendgerätes (20) während der Herstellung und/oder während des Betriebes des Telekommunikationskontakts zu beeinflussen, wobei der Telekommunikationskontakt in Form einer Telekommunikationsverbindung oder einer Telekommunikationssitzung zwischen einem Mobilfunk-Telekommunikationsnetz (10) und dem Telekommunikationsendgerät (20) bereitgestellt wird,
wobei der Telekommunikationskontakt alternativ gemäß einer ersten Dienstqualität oder gemäß einer zweiten Dienstqualität betrieben werden kann, wobei das Telekommunikationsendgerät (20) dafür ausgelegt ist, erste Steuerungsinformationen (15), die sich auf die Verkehrslast beziehen, von dem Mobilfunk-Telekommunikationsnetz (10) zu empfangen, wobei das Telekommunikationsendgerät (20) dafür ausgelegt ist, zweite Steuerungsinformationen (25) zu dem Mobilfunk-Telekommunikationsnetz (10) zu senden, wobei die ersten Steuerungsinformationen (15) Verkehrslastinformationen sind, die sich auf die Funkzelle des Telekommunikationsendgerätes (20) beziehen und an alle Telekommunikationsendgeräte in der Funkzelle signalisiert werden, wobei der Empfang der zweiten Steuerungsinformationen (25) von dem Telekommunikationsendgerät (20) in Abhängigkeit von den ersten Steuerungsinformationen (15) bereitgestellt wird und der Telekommunikationskontakt gemäß der ersten Dienstqualität oder gemäß der zweiten Dienstqualität in Abhängigkeit von den zweiten Steuerungsinformationen (25) bereitgestellt wird, wobei die erste oder die zweite Dienstqualität auf dem Telekommunikationsendgerät (20) entweder mittels einer Entscheidung oder gemäß einer Ausgestaltung des Telekommunikationsendgerätes (20) ausgewählt wird.

11. Computerprogramm, das ein Programmcodemittel umfasst, mit dessen Hilfe alle Schritte eines Verfahrens nach einem der Ansprüche 1 bis 4 ausgeführt werden können, falls das Computerprogramm in einer Netzwerkeinheit eines Mobilfunk-Telekommunikationsnetzes (10), einem Computer oder einer entsprechenden Berechnungseinheit ausgeführt wird.

12. Computerprogrammprodukt, das ein computerlesbares Medium und ein Computerprogramm, das auf dem computerlesbaren Medium gespeichert ist, umfasst, das ein Programmcodemittel umfasst, mit dessen Hilfe alle Schritte eines Verfahrens nach einem der Ansprüche 1 bis 4 ausgeführt werden können, falls das Computerprogramm in einer Netzwerkeinheit eines Mobilfunk-Telekommunikationsnetzes (10), einem Computer oder einer entsprechenden Berechnungseinheit ausgeführt wird.

## Revendications

1. Procédé pour influencer la qualité de service associée a un contact de télécommunication de la part d'un terminal de télécommunication (20) pendant l'établissement et/ou pendant le fonctionnement du contact de télécommunication, dans lequel le contact de télécommunication est fourni sous la forme d'une liaison de télécommunication ou d'une session de télécommunication entre un réseau de télécommunication radio mobile (10) et le terminal de télécommunication (20),
dans lequel le contact de télécommunication peut fonctionner alternativement selon une première qualité de service ou selon une seconde qualité de service,
dans lequel de premières informations de commande (15), relatives à la charge de trafic, sont transmises à partir du réseau de télécommunication radio mobile (10) au terminal de télécommunication (20), dans lequel de secondes informations de commande (25) sont transmises à partir du terminal de télécommunication (20) au réseau de télécommunication radio mobile (10), dans lequel les premières informations de commande (15) sont des informations de charge de trafic relatives à la cellule radio du terminal de télécommunication (20) et sont signalées à tous les terminaux de télécommunication de la cellule radio, les secondes informations de commande (25) sont générées en fonction des premières informations de commande (15) et le contact de télécommunication est établi et/ou fonctionne selon la première qualité de service ou selon la seconde qualité de service en fonction des secondes informations de commande (25), dans lequel la première ou la seconde qualité de service est sélectionnée sur le terminal de télécommunication (20), soit au moyen d'une décision, soit en fonction d'une configuration du terminal de télécommunication (20).

2. Procédé selon la revendication 1, **caractérisé en ce que** les premières informations de commande (15) relatives à la cellule radio du terminal de télécommunication (20) sont transmises
- sur un canal commun de la cellule radio du terminal de télécommunication (20), en particulier sur un canal de diffusion ou sur un canal de commande d'accès aller (FACH), ou
- sur un canal supplémentaire de la cellule radio du terminal de télécommunication (20).

3. Procédé selon la revendication 2, **caractérisé en ce que** les premières informations de commande (15) comportent une partie relative à une première classe de trafic et une partie relative à une seconde classe de trafic.

4. Procédé selon l'une quelconque des revendications précédentes, **caractérisé en ce que** les secondes informations de commande (25) sont relatives à un nom de point d'accès (APN) spécifique parmi une pluralité de noms de points d'accès disponibles pour le terminal de télécommunication (20), dans lequel l'indication du nom de point d'accès spécifique est déterminée par le terminal de télécommunication (20) en fonction des premières informations de commande (15).

5. Réseau de télécommunication radio mobile (10), configuré pour influencer la qualité de service associée à un contact de télécommunication de la part d'un terminal de télécommunication (20) pendant l'établissement et/ou pendant le fonctionnement du contact de télécommunication, dans lequel le contact de télécommunication est fourni sous la forme d'une liaison de télécommunication ou d'une session de télécommunication entre le réseau de télécommunication radio mobile (10) et le terminal de télécommunication (20), dans lequel le contact de télécommunication peut fonctionner de manière alternative selon une première qualité de service ou selon une seconde qualité de service,
dans lequel le réseau de télécommunication radio mobile (10) est conçu pour transmettre de premières informations de commande (15) relatives à la charge de trafic à partir du réseau de télécommunication radio mobile (10) au terminal de télécommunication (20), dans lequel le réseau de télécommunication radio mobile (10) est conçu pour recevoir de secondes informations de commande (25) à partir du terminal de télécommunication (20), dans lequel les premières informations de commande (15) sont des informations de charge de trafic relatives à la cellule radio du terminal de télécommunication (20) et sont signalées à tous les terminaux de télécommunication dans la cellule radio, la réception des secondes informations de commande (25) à partir du terminal de télécommunication (20) est prévue en fonction des premières informations de commande (15), et le contact de télécommunication est fourni selon la première qualité de service ou selon la seconde qualité de service en fonction des secondes informations de commande (25), dans lequel la première ou la seconde qualité de service est sélectionnée sur le terminal de télécommunication (20), soit au moyen d'une décision, soit en fonction d'une configuration du terminal de télécommunication (20).

6. Réseau de télécommunication radio mobile (10) selon la revendication 5, **caractérisé en ce que** la transmission des premières informations de commande (15) relatives à la cellule radio du terminal de télécommunication (20) est prévue
- sur un canal commun de la cellule radio du terminal de télécommunication (20), en particulier sur un canal de diffusion ou sur un canal de commande d'accès aller (FACH), ou
- sur un canal supplémentaire de la cellule radio du terminal de télécommunication (20).

7. Réseau de télécommunication radio mobile (10) selon la revendication 6, **caractérisé en ce que** la génération des premières informations de commande (15) par une unité de station de base, en particulier une unité NodeB ou une unité eNodeB, ou par un contrôleur de réseau radio (RNC) est prévue.

8. Réseau de télécommunication radio mobile (10) selon la revendication 6 ou 7, **caractérisé en ce que** les premières informations de commande (15) comportent une partie relative à une première classe de trafic et une partie relative à une seconde classe de trafic.

9. Réseau de télécommunication radio mobile (10) selon l'une quelconque des revendications 6 à 8, **caractérisé en ce que** les secondes informations de commande (25) sont relatives à un nom de point d'accès (APN) spécifique parmi une pluralité de noms de points d'accès disponibles pour le terminal de télécommunication (20).

10. Terminal de télécommunication (20), configuré pour influencer la qualité de service associée à un contact de télécommunication de la part du terminal de télécommunication (20) pendant l'établissement et/ou pendant le fonctionnement du contact de télécommunication, dans lequel le contact de télécommunication est fourni sous la forme d'une liaison de télécommunication ou d'une session de télécommunication entre un réseau de télécommunication radio mobile (10) et le terminal de télécommunication (20),
dans lequel le contact de télécommunication peut fonctionner alternativement selon une première qualité de service ou selon une seconde qualité de service,
dans lequel le terminal de télécommunication (20) est conçu pour recevoir de premières informations de commande (15) relatives à la charge de trafic à partir du réseau de télécommunication radio mobile (10), dans lequel le terminal de télécommunication (20) est conçu pour transmettre de secondes informations de commande (25) au réseau de télécommunication radio mobile (10), dans lequel les premières informations de commande (15) sont des informations de charge de trafic relatives à la cellule radio du terminal de télécommunication (20) et sont signalées à tous les terminaux de télécommunication de la cellule radio, la réception des secondes informations de commande (25) à partir du terminal de télécommunication (20) est prévue en fonction des premières informations de commande (15) et le contact de télécommunication est fourni selon la première qualité de service ou selon la seconde qualité de service en fonction des secondes informations de commande (25), dans lequel la première ou la seconde qualité de service est sélectionnée sur le terminal de télécommunication (20), soit au moyen d'une décision, soit en fonction d'une configuration du terminal de télécommunication (20).

11. Programme d'ordinateur comprenant un moyen de code de programme à l'aide duquel toutes les étapes d'un procédé selon l'une quelconque des revendications 1 à 4 peuvent être effectuées si le programme d'ordinateur est exécuté sur une unité de réseau d'un réseau de télécommunication radio mobile (10), un ordinateur ou une unité informatique correspondante.

12. Produit programme d'ordinateur comprenant un support lisible par ordinateur et un programme d'ordinateur - stocké sur le support lisible par ordinateur - comprenant un moyen de code de programme à l'aide duquel toutes les étapes d'un procédé selon l'une quelconque des revendications 1 à 4 peuvent être effectuées si programme d'ordinateur est exécuté sur une unité de réseau d'un réseau de télécommunication radio mobile (10), un ordinateur ou une unité informatique correspondante.
